# EUROPEAN PATENT SPECIFICATION

(11) **EP 0 325 307 B1**
(45) Date of publication and mention of the grant of the patent: **03.02.1993**
(21) Application number: 89105398.5
(22) Date of filing: 22.12.1983
(51) Int. Cl.: C10M 133/38, C10M 133/58, C10L 1/22

(54) **Macrocyclic polyamine multifunctional lubricating oil additives**
Polyzyklische Polyamine als multifunktionale Schmierölzusätze
Polyamines polycycliques comme additifs multifonctionnels pour huiles lubrifiantes

(30) Priority: 27.12.1982 US 453143; 16.11.1983 US 550977
(43) Date of publication of application: 26.07.1989
(62) Divisional of application: 83307871.0
(73) Proprietor: EXXON RESEARCH AND ENGINEERING COMPANY, Florham Park, New Jersey 07932-0390 (US)
(72) Inventor: Brois, Stanley James, Westfield New Jersey (US); Gutierrez, Antonio, Mercerville New Jersey (US)
(74) Representative: Northover, Robert Frank

(56) References cited:
- US-A- 3 219 666
- US-A- 3 977 981

## Description

This invention relates to novel lubricating oil additives and lubricating oil compositions containing same which exhibit the desirable properties of being multifunctional dispersants and viscosity index improvers for both gasoline and diesel engine formulations. More particularly, the invention relates to amine derivatives of oil soluble hydrocarbon substituted succinic anhydrides which are characterized by a macrocyclic polyamine structure resulting from reaction with certain pre-formed cyclic amino compounds.

Lubrication oil additives, especially dispersants prepared by the reaction of hydrocarbon substituted succinic acid anhydrides with polyamines, to give linear mono and bis-imides, are well known in the art and representative disclosures include US-A-3 172 892 and US-A-3 272 746. Patents which disclose a cyclic structure for the dispersant additive include US-A-4 102 798 and US-A-4 239 636 which discloses a product containing a macrocyclic lactone ester.

Dispersant viscosity index (VI) improvers which result from the grafting of maleic anhydride to an ethylene propylene copolymer with subsequent reaction with polyamines are also known and are disclosed; for example, in US-A-4 089 794 and US-A-4 144 181. The present invention is considered distinguished from the foregoing patents through formation of the characteristic macrocylcic polyamine structure.

US-A-4 160 739 teaches that in the reaction between polyamines and grafted maleic anhydride polymers, only one reactive amine group must be present in the polyamine to eliminate interfering reactions. US-A-4 137 185 teaches that, in the reaction between the same materials, alkylene polyamines having two primary amine groups produce linear amino-imides which can cause adverse increases in viscosity, and, therefore, acylation of NH₂ groups in the amino-imide products with anhydrides is required to prevent chain extension.

One aspect of the present invention is based upon the discovery that certain macrocyclic polyamine compounds possess significant properties as multi-functional dispersant-viscosity index improvers, especially the capability to be a highly effective dispersant in both a gasoline engine lubricating oil formulation and corresponding diesel engine lubricating oil formulations and thereby enable lubricating oils containing these novel additives to pass or exceed the highest qualification standards for such oils.

US-A-3 977 981 discloses certain macrocyclic tetramine compounds for use in compositions for coating metal surfaces, such as well conduits, for corrosion inhibition, but is not pertinent to lubricating oil or fuel additive technology.

The present invention provides the use as an additive for lubricating oil and for fuels of an oil-soluble macrocyclic polyamine compound which is the reaction product of a hydrocarbon succinic anhydride or carboxylic acid having 8 to 15,000 carbon atoms with an aza macrocyclic compound having at least 2 NH groups and represented by the formula 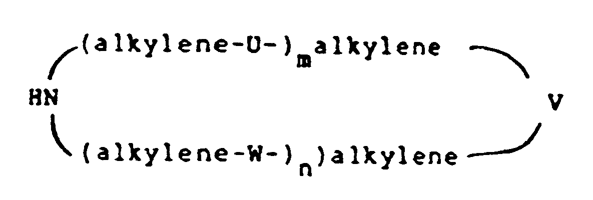
where U, V and W may be NH, S or O, n and m are integers of 1 to 4, alkylene is C₂-C₄.

The invention also provides lubricating oil compositions and fuel compositions comprising oil-soluble macrocyclic polyamine compounds as defined above.

The invention further provides an oil-soluble macrocyclic polyamine compound which is the reaction product of a hydrocarbon succinic anhydride or carboxylic acid having 8 to 15,000 carbon atoms with an aza macrocyclic compound having at least 2 NH groups and represented by the formula 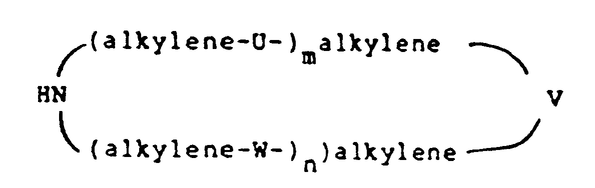
where U, V and W may be NH, S or O, n and m are integers of 1 to 4, alkylene is C₂-C₄, with the proviso that at least one of U, V and W is other than NH.

The invention additionally provides an oil-soluble macrocyclic polyamine compound which is the reaction product of a hydrocarbon succinic anhydride or carboxylic acid having 50 to 15,000 carbon atoms with an aza macrocyclic compound having at least 2 NH groups and represented by the formula 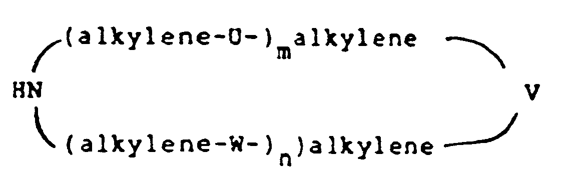
where U, V and W may be NH, S or O, n and m are integers of 1 to 4, alkylene is C₂-C₄.

The polycyclic polyamine additives according to the present invention can be prepared by condensing hydrocarbon succinic anhydrides with polycyclic polyamines (aza crown compound) in an acylation reaction.

The hydrocarbon substituted succinic anhydrides which are suitable for reaction with the pre-formed cyclic amines in accordance with this invention are derived generally from oil soluble hydrocarbons comprising unbranched saturated or unsaturated hydrocarbon chains of at least 8, preferably at least 50 carbon atoms including both polymeric, oligomeric and nonpolymeric aliphatic chains, particularly polymers of C₂-C₅ olefins. Particularly preferable for use in this invention is thermal polyisobutenyl succinic anhydride of Mn about 900 to 2,000 produced in the "ene" reaction by heating together polyisobutylene and maleic anhydride at about 200°C. Hydrocarbon substituents having from about 8 to 50 carbon atoms, while forming useful oil-soluble products, are less preferable as dispersant viscosity index improvers. They have been found, however, to exhibit desirable properties as antioxidants in oleaginous compositions, such as products of the present invention derived from octadecenyl succinic anhydride.

Suitable olefin polymers include polymers comprising a major molar amount of C₂ to C₅ mono olefins, e.g., ethylene, propylene, butylene, isobutylene and pentene. The polymers may be homopolymers such as polyisobutylene, as well as copolymers of two or more such olefins such as copolymers of ethylene and propylene, butylene and isobutylene, propylene and isobutylene and the like. Other copolymers include those in which a minor molar amount of the copolymer monomers, e.g, 1-20 mole %, is a C₄ to C₁₈ non-conjugated diolefin, e.g., a copolymer of ethylene, propylene and 1,4-hexadiene, i.e. the EPDM polymers.

The olefin polymers will usually have number average molecular weight within the range of about 500 to about 200,000, more usually to about 60,000. Particularly useful olefin polymers for dispersant additives have number average molecular weights (Mn) within the range of about 900 to about 2,000 with approximately one terminal bond per polymer chain. Especially useful material in the present invention is polyisobutylene. Polybutene-1 and polypropylene are also preferred hydrocarbon substituents for preparing dispersants.

Particularly useful materials, when dispersant-viscosity index improving additives are desired, are derived from ethylene/propylene copolymers, terpolymers and tetrapolymers having a Mₙ of about 10,000 to 200,000, especially 25,000 to 100,000. An example is a copolymer of about 30 to 85 mole % ethylene, 15 to 70 mole % C₃ to C₅ mono-alpha-olefin, preferably propylene, and 0 to 20 mole % of a C₄ to C₁₄ non-conjugated diene. Preferred examples of such dienes include those of US-A-3,790,480; 4,089,794 and 4,137,185. Particularly useful dienes are 5-ethylidene norbornene; 1,4-hexadiene; 2,5-norbornadiene and ethyl norbornadiene. The latter terpolymers are commercially available under the trademarks VISTALON® an elastomeric terpolymer of ethylene, propylene and 5-ethylidene norbornene, marketed by Exxon Chemical Company and NORDEL® a terpolymer of ethylene, propylene and 1,4-hexadiene, marketed by E. I. DuPont de Nemours and Company The term copolymer as used herein is meant to include terpolymers and tetrapolymers.

Other useful hydrocarbon substituents include styrene-isoprene copolymers, styrene-isobutene copolymers, isobutene-butadiene-1,3 copolymers, propene-isoprene copolymers, isobutene-chloroprene copolymers, isobutene-(para-methyl)styrene copolymers, copolymers of hexene-1 with hexadiene-1,3, copolymers of octene-1 with hexene-1, copolymers of heptene-1 with pentene-1, copolymers of 3-methyl-butene-1 with octene-1, copolymers of 3,3-dimethyl-pentene-1 with hexene-1, and terpolymers of isobutene, styrene and piperylene. More specific examples of such interpolymers include copolymer of 95% (by weight) of isobutene with 5% (by weight) of styrene; terpolymer of 98% of isobutene with 1% of piperylene and 1% of chloroprene; terpolymer of 95% of isobutene with 2% of butene-1 and 3% of hexene-1; terpolymer of 60% of isobutene with 20% of pentene-1 and 20% of octene-1; copolymer of 80% of hexene-1 and 20% of heptene-1; terpolymer of 90% of isobutene with 2% of cyclohexene and 8% of propylene.

Techniques for attaching succinic anhydride groups to the above-described hydrocarbons and polymers are well known in the art and these include, for example, reacting maleic anhydride directly with the polyolefin which may have first been halogenated in the range of about 2 to 5 wt. % prior to the reaction of maleic anhydride. Grafting of maleic anhydride with ethylene propylene copolymers and terpolymers is described in US-A-4,089,794 and 4,137,185 and represents a particularly preferred embodiment since it provides a multi-site reactant which, upon aminolysis and cyclodehydration in accordance with the invention, results in a lubricating oil additive having especially valuable multi-functional dispersant-viscosity index improving properties and such products are especially useful in improving the dispersancy of diesel engine oil formuations.
Aza crown compounds useful herein are those having at least 2 NH groups and may be represented by the formula: 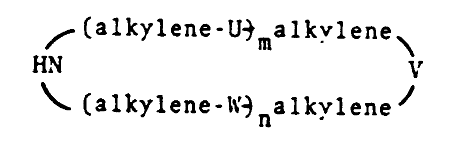
wherein U,V and W can be NH, S and/or O, n or m is an integer of 1 to about 4, alkylene is C₂-C₄, usually an ethylene or trimethylene group, and these aza crown compounds include macrocyclic polyamines (U=V=W=NH), polyether amines; U=W=O, V=NH, etc.) and polythioether amines; U=W=S; V=NH).

Examples within the scope of the foregoing formula are macrocyclic polyamines and their complexes having three to about eight nitrogen atoms, at least one, which is an NH group. Preferred are those having four nitrogen donors in cycles containing about 12 to 16 atoms. Examples of useful macrocyclic polyamines include 1,4,8,11-tetraazacyclo-tetradecane (cyclam), 1,4,7,10-tetrazacyclododecane, 1,4,7, 10-tetraazacyclotridecane, 1,4,8,12-tetraazacyclopentadecane, 1,5,9,13-tetraazacyclohexadecane, and 1,4,7,10,13, 16-hexaazacyclooctadecane (hexacyclen).

Also suitable are mixed donor macrocyclic amines containing nitrogen-oxygen, nitrogen-sulfur, and nitrogen-oxygen-sulfur donor groups as depicted below which can be acylated to give useful lubricant additives.

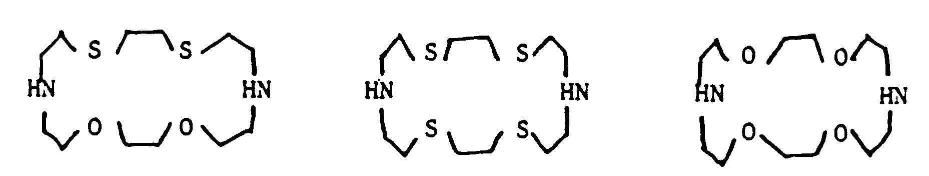

These amino compounds may be acylated by reacting at least a half-mole equivalent up to a 2 mole equivalent of the aforementioned hydrocarbon substituted succinic anhydrides to yield useful lubricant additives.

Further embodiments of the present invention reside in the formation of metal complexes and other post-treatment derivatives, e.g. borated derivatives, of the novel macrocyclic additives prepared in accordance with this invention. Suitable metal complexes may be formed in accordance with known techniques of employing a reactive metal ion species during or after the reaction of the polyamine and the hydrocarbyl anhydride compound. Complex-forming metal reactants include the nitrates, thiocyanates, halides, carboxylates, phosphates, thio-phosphates, sulfates, and borates of transition metals such as iron, cobalt, nickel, copper, chromium, manganese, molybdenum, tungsten, ruthenium, palladium, platinum, cadmium, lead, silver, mercury, antimony and the like. Prior art disclosures of these complexing reactions may be found in US-A-3,306,908 and Re. 26,433.

Post-treatment compositions include reacting the novel macrocyclic additives of the present invention with one or more post-reacting reagents, usually selected from the group consisting of boron oxide, boron oxide hydrate, boron halides, boron acids, sulfur, sulfur chlorides, phosphorous sulfides and oxides, carboxylic acid or anhydride acylating agents, epoxides and episulfides and acrylonitriles. The reaction of such post-treating agents with the novel macrocyclic polyamine compounds of this invention is carried out using procedures known in the art. For example, boration is accomplished in accordance with the teachings of US-A-3,254,025 by treating the macrocyclic polyamine compound with a boron oxide, halide, ester or acid to provide about 0.1 to 1 atomic proportions of boron for each atomic proportion of nitrogen in the composition. Treatment is carried out by adding about 1-3 wt% of boron compound, preferably boric acid, and heating and stirring the reaction mixture at about 135°C to 165°C for 1 to 5 hours followed by nitrogen stripping and filtration, if desired. Mineral oil or inert organic solvents facilitate the process.

A particularly preferred post-treatment technique especially useful for preparation of lubricating oil dispersants is post-treatment with a polyisobutenyl succinic anhydride. In this embodiment a polyisobutenyl succinic anhydride-poly 3-aminopropylamine macrobicyclic reaction product is first prepared in accordance with the invention, and subsequently treated with about 10 - 50 mole % of additional polyisobutenyl (Mn of about 900-2000) succinic anhydride at elevated temperatures of about 120°C for about one hour or until the reaction mixture shows complete reaction of the free anhydride. Such products are especially useful as dispersants for diesel engine lubricating oil compositions.

The products of this invention can be incorporated in lubricating oil compositions, e.g., gasoline or diesel crankcase lubricating oil in active ingredient concentrations within the range of about 0.01 to 20 wt% based on the total weight of the lubricating oil composition. Such additives are usually dispensed in the form of concentrates as discussed below.

The products prepared according to this invention can be incorporated in a wide variety of lubricants. They can be used in lubricating oil compositions, such as automotive crankcase lubricating oils, automatic transmission fluid, etc., in active ingredient concentrations generally within the range of about 0.5 to 10 wt%, for example, 1 to 5 wt. %, preferably 1.5 to 3 wt. % of the total composition when used only as a dispersant. Conventionally, the dispersants are admixed with the lubricating oils as concentrates which usually contain up to about 50% weight of the additive compound dissolved in mineral oil, preferably a mineral oil having an ASTM D-445 viscosity of about 2 to 40, preferably 5 to 20 centistokes (5-20 mm²/s) at 99°C. The lubricating oil includes not only hydrocarbon oils derived from petroleum but also includes synthetic lubricating oils such as polyethylene oils; alkyl esters of dicarboxylic acids, complex esters of di-carboxylic acid, polyglycol and alcohol; alkyl esters of carbonic or phosphoric acids; polysilicones; fluorohydrocarbon oils; and, mixtures of lubricating oils and synthetic oils in any proportion, et. The term, "lubricating oil" for this disclosure includes all the foregoing. The useful additive of this invention may be conveniently dispensed as a concentrate of 10 to 80 wt. % such as about 49 wt. % of said dispersant in 20 to 90 wt. % of mineral oil, e.g., Solvent 150 Neutral oil with or without other additives being present.

As noted above, such composition or concentrates containing the dispersants of the present invention will also contain other well-known additives such as the zinc dialkyl (C₃-C₈) dithiophosphate anti-wear inhibitors usually present in amounts of from 1 to 5 wt. %.

Useful detergents include the normal basic or over-based metal, e.g., calcium magnesium, barium, etc., salts of petroleum naphthene acids, petroleum sulfonic acids, alkyl benzene sulfonic acids, oil-soluble fatty acids, alkyl salicyclic acids, alkylene bisphenols and hydrolyzed phosphosulfurized polyolefins. Typical amounts are from 1-7 wt. % with preferred materials being normal and basic calcium and magnesium sulfonates, phenates and sulfurized phenates.

Oxidation inhibitors include hindered phenols, e.g., 2,6-ditert-butyl para-cresol, amines, sulfurized phenols and alkyl phenothiazines, usually present in amounts of from 0.001 to 1 wt. %.

Pour point depressants usually present in amounts of 0.01 to 1 wt.% include wax alkylated aromatic hydrocarbons, olefin polymers and copolymers, acrylate and methacrylate polymers and copolymers.

Viscosity index improvers including olefin polymers and copolymers such as polybutene, ethylene-propylene copolymers, hydrogenated polymers and copolymers and terpolymers of styrene with isoprene and/or butadiene, polymers of alkyl acrylates or alkyl methacrylates, copolymers of alkyl methacrylates with N-vinyl pyrrolidone or dimethyl-aminoalkyl methacrylate, post-grafted polymers of ethylenepropylene with an active monomer such as maleic anhydride which may be further reacted with an alcohol or an alkylene polyamine, styrene/maleic anhydride polymers post-treated with alcohols and amines, etc. Such products are used in amounts as required to meet the viscosity grade desired, generally 1-15 wt.% being used.

Rust inhibition activity can be provided by the aforementioned metal dihydrocarbyl dithiophosphates and the corresponding precursor esters, phosphosulfurized pinenes, sulfurized olefins and hydrocarbons, sulfurized fatty esters and sulfurized alkyl phenols. Preferred are the zinc di-hydrocarbyl dithiophosphates which are salts of dihydrocarbyl (C₃-C₈) esters of dithiophosphoric acids. Rust inhibitors are usually used in the range of 0.01 to 1 wt. %.

Fuel economy or friction reducing additives may also be present such as dimer acid esters with glycols as disclosed in US-A-4,105,781 issued to Shaub with the esters of dimerized linoleic acid and diethylene glycol being a preferred material or other effective fuel economy additives such as glycerol esters of C₁₆-C₁₈ fatty acids with glycerol oleate being especially suitable. These additives are present in amounts which vary greatly according to their effectiveness but generally are used in very small proportions.

Thus, the term lubricating oil composition as used herein is meant to include an oil of lubricating viscosity containing in addition to the products of this inventions conventional additives in customary amounts as required to provide their normal attendant functions.

The macrocyclic polyamine compounds of this invention may also be used in fuels in amounts sufficient to provide dispersant and detergent properties to the fuel, particularly in preventing and removing deposits from the carburetor and fuel lines when used preferably in gasoline fuel composition. The compounds of the invention may be used in fuels in amounts ranging from about 0.0001 to about 1 wt.%, preferably about 0.0004 to about 0.1 wt.% based on the weight of the fuel composition, more especially at least 0.001 wt. %. Suitable fuel compositions include normally liquid hydrocarbon fuels such as motor gasoline (ASTM D439-73) diesel fuel or fuel oil (ASTM D-391) and mixtures of such hydrocarbon fuels with non-hydrocarbon materials such as alcohols, ethers, nitro compounds and the like.

The invention is further illustrated by the following examples which are not to be considered as limitative of its scope.

To emphasize the remarkable sensitivity of product composition to mode of addition, the prior art method, i.e. the addition of polyamine to hydrocarbon succinic anhydride (direct addition) is also described to illustrate the formation of linear imide product as taught in the prior art.

### A. EXAMPLES OF DISPERSANTS PREPARED VIA AMINATION OF PIBSA WITH AZA CROWN AND AZA POLYCYCLIC COMPOUNDS.

### EXAMPLE A1. AMINOLYSIS OF PIBSA WITH 1,4,9,11-TETRA-AZACYCLOTETRADECANE(CYCLAM)

6.5 gms of the polyisobutenylsuccinic anhydride (PIBSA) prepared via Ene reaction of polyisobutylene (Mn 1300 by vapor phase osmometry) and maleic anhydride as described by Brois and Gutierrez in US-A-4,239,636, and having a saponification number of 48.5 and 0.5gm (2.5 millimoles) of cyclam were combined and heated to 150°C; the reaction mixture was stirred for several hours at 150° and then nitrogen sparged for two hours. The concentrate analyzed for 1.65% nitrogen, and had an IR spectrum with carbonyl absorption characteristic of an acylated cyclam product.

The above procedure was repeated except the amount of PIBSA used was doubled to reflect further acylation of the cyclam compound. The final product analyzed for 1.13% nitrogen.

### EXAMPLE A2. AMINOLYSIS OF PIBSA WITH HEXACYCLEN (1,4,7,10,13,16-HEXAAZACYCLOOCTADECANE).

Equimolar amounts of the aza crown compound and the PIBSA of Example A1 were combined and heated at 150°C, the mixture was stirred at this temperature for two hours and nitrogen sparged for 1 hour. The acylated hexacyclen product contained 1.5% nitrogen.

The procedure above was repeated except the amount of PIBSA was doubled. The final product contained .85% nitrogen.

## Claims

1. Use as an additive for lubricating oil of an oil-soluble macrocyclic polyamine compound which is the reaction product of a hydrocarbon succinic anhydride or carboxylic acid having 8 to 15,000 carbon atoms with an aza macrocyclic compound having at least 2 NH groups and represented by the formula 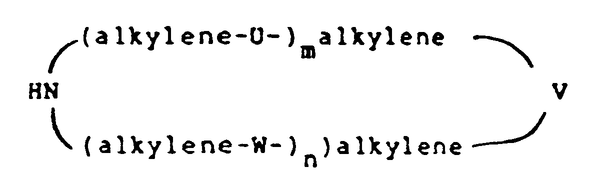 where U, V and W may be NH, S or O, n and m are integers of 1 to 4, alkylene is C₂-C₄.

2. Use as an additive for fuels of a compound as defined in claim 1.

3. A lubricating oil composition comprising a major amount of an oil of lubricating viscosity and 0.01 to 20 wt% of a compound as defined in claim 1.

4. A fuel composition comprising a major amount of a hydrocarbon fuel containing 0.0001 to 1 wt%, preferably at least 0.0004 to 0.1 wt %, of a compound as defined in claim 1.

5. A use or composition as claimed in any one of claims 1 to 4, wherein the aza compound is 1,4,8,11-tetraazacyclotetradecane, 1,4,7,10-tetraazacyclododecane, 1,4,7,10-tetraazacyclotridecane, 1,4,8,12-tetraazacyclopentadecane, 1,5,9,13-tetraazacyclohexadecane or 1,4,7,10,13,16-hexaazacyclooctadecane.

6. An oil-soluble macrocyclic polyamine compound which is the reaction product of a hydrocarbon succinic anhydride or carboxylic acid having 8 to 15,000 carbon atoms with an aza macrocyclic compound having at least 2 NH groups and represented by the formula 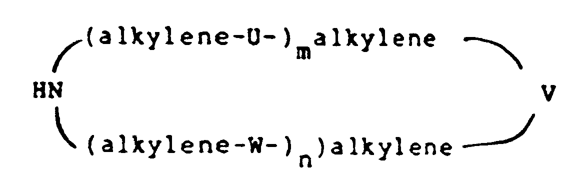 where U, V and W may be NH, S or O, n and m are integers of 1 to 4, alkylene is C₂-C₄, with the proviso that at least one of U, V and W is other than NH.

7. An oil-soluble macrocyclic polyamine compound which is the reaction product of a hydrocarbon succinic anhydride having 50 to 15,000 carbon atoms with an aza macrocyclic compound having at least 2 NH groups and represented by the formula 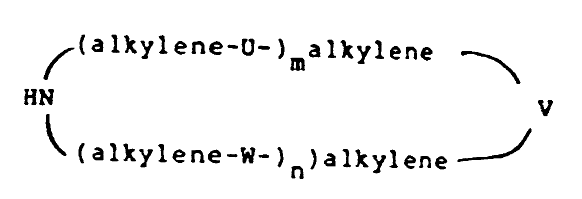 where U, V and W may be NH, S or O, n and m are integers of 1 to 4, alkylene is C₂-C₄.

## Patentansprüche

1. Verwendung einer öllöslichen makrocyclischen Polyaminverbindung als Additiv für Schmieröl, die das Reaktionsprodukt eines Kohlenwasserstoffbernsteinsäureanhydrids oder einer -carbonsäure mit 8 bis 15 000 Kohlenstoffatomen und einer makrocyclischen Azaverbindung mit mindestens zwei NH-Gruppen und der Formel 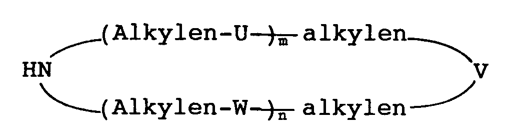 ist, in der U, V und W NH, S oder O sein können, n und m ganze Zahlen von 1 bis 4 sind und Alkylen C₂ bis C₄ ist.

2. Verwendung einer wie in Anspruch 1 definierten Verbindung als Additiv für Brennstoffe.

3. Schmierölzusammensetzung, die eine größeren Menge eines Öls mit Schmierstoffviskosität und 0,1 bis 20 Gew.% einer wie in Anspruch 1 definierten Verbindung umfaßt.

4. Brennstoffzusammensetzung, die eine größere Menge eines Kohlenwasserstoffbrennstoffs umfaßt, der 0,0001 bis 1 Gew.%, vorzugsweise mindestens 0,0004 bis 0,1 Gew.% einer wie in Anspruch 1 definierten Verbindung enthält.

5. Verwendung oder Zusammensetzung nach einem der Ansprüche 1 bis 4, wobei die Azaverbindung 1,4,8,11-Tetraazacyclotetradecan, 1,4,7,10-Tetraazacyclododecan, 1,4,7,10-Tetraazacyclotridecan, 1,4,8,12-Tetraazacyclopentadecan, 1,5,9,13-Tetraazacyclohexadecan oder 1,4,7,10,13,16-Hexaazacyclooctadecan ist.

6. Öllösliche makrocyclische Polyaminverbindung, die das Reaktionsprodukt eines Kohlenwasserstoffbernsteinsäureanhydrids oder einer -carbonsäure mit 8 bis 15 000 Kohlenstoffatomen und einer makrocyclischen Azaverbindung mit mindestens zwei NH-Gruppen und der Formel 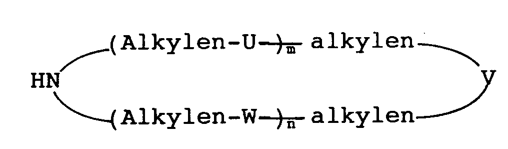 ist, in der U, V und W NH, S oder O sein können, n und m ganze Zahlen von 1 bis 4 sind und Alkylen C₂ bis C₄ ist, mit der Maßgabe, daß mindestens einer aus U, V und W von NH verschieden ist.

7. Öllösliche makrocyclische Polyaminverbindung, die das Reaktionsprodukt eines Kohlenwasserstoffbernsteinsäureanhydrids mit 50 bis 15 000 Kohlenstoffatomen und einer makrocyclischen Azaverbindung mit mindestens zwei NH-Gruppen und der Formel 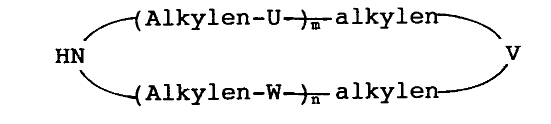 ist, in der U, V und W NH, S oder O sein können, n und m ganze Zahlen von 1 bis 4 sind und Alkylen C₂ bis C₄ ist.

## Revendications

1. Utilisation comme additif pour huile lubrifiante d'un composé polyaminé macrocyclique soluble dans l'huile qui est le produit de réaction d'un anhydride succinique à substituant hydrocarboné ou d'un acide carboxylique ayant 8 à 15 000 atomes de carbone avec un composé aza macrocyclique portant au moins deux groupes NH et est représenté par la formule 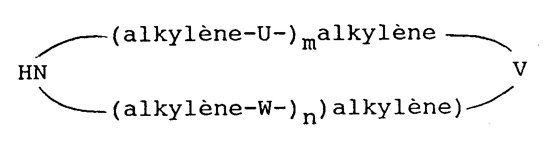 dans laquelle U, V et W peuvent représenter NH, S ou O, n et m sont des nombres entiers de 1 à 4 et l'alkylène est en C₂ à C₄.

2. Utilisation comme additif pour carburants d'un composé tel que défini dans la revendication 1.

3. Composition d'huile lubrifiante, comprenant une quantité dominante d'une huile de viscosité propre à la lubrification et 0,01 à 20 % en poids d'un composé tel que défini dans la revendication 1.

4. Composition de carburant, comprenant une quantité dominante d'un carburant hydrocarboné contenant 0,0001 à 1 % en poids, de préférence au moins 0,0004 à 0,1 % en poids d'un composé tel que défini dans la revendication 1.

5. Utilisation ou composition suivant l'une quelconque des revendications 1 à 4, dans laquelle le composé aza est le 1,4,8-11-tétra-azacyclotétradécane, le 1,4,7,10-tétra-azacyclododécane, le 1,4,7,10-tétra-azacyclotridécane, le 1,4,8,12-tétra-azacyclopentadécane, le 1,5,9,13-tétra-azacyclohexadécane ou le 1,4,7,10,13,16-hexa-azacyclooctadécane.

6. Polyamine macrocyclique soluble dans l'huile, qui est le produit de réaction d'un anhydride succinique à substituant hydrocarboné ou d'un acide carboxylique ayant 8 à 15 000 atomes de carbone avec un composé aza macrocyclique ayant au moins deux groupes NH et représenté par la formule 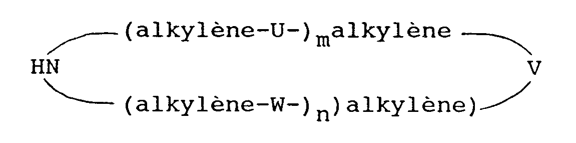 dans laquelle U, V et W peuvent représenter NH, S ou O, n et m sont des nombres entiers de 1 à 4 et l'alkylène est en C₂ à C₄, sous réserve qu'au moins l'un de U, V et W représente autre chose que NH.

7. Polyamine macrocyclique soluble dans l'huile, qui est le produit de réaction d'un anhydride succinique à substituant hydrocarboné ayant 50 à 15 000 atomes de carbone avec un composé aza macrocyclique ayant au moins deux groupes NH, et représenté par la formule 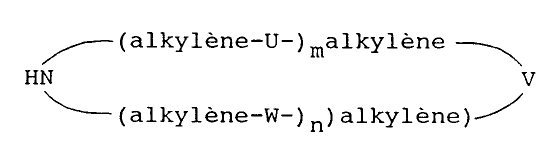 dans laquelle U, in et W peuvent représenter NH, S ou 0, n et m sont des nombres entiers de 1 à 4 et l'alkylène est en C₂ à C₄.
